(19)

Europäisches
Patentamt

European
Patent Office

Office européen
des brevets

(11) **EP 1 862 816 B1**

(12) **EUROPEAN PATENT SPECIFICATION**

(45) Date of publication and mention
of the grant of the patent:
**20.03.2013 Bulletin 2013/12**

(51) Int Cl.:
*G01S 19/21* (2010.01)     *H04B 1/7075* (2011.01)
*H04B 1/71* (2011.01)

(21) Application number: **06011586.2**

(22) Date of filing: **04.06.2006**

(54) **Time-frequency interfering detector**

Zeit-Frequenz Interferenz Detektor

Detecteur d'interference Temps-Frequence

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**05.12.2007 Bulletin 2007/49**

(73) Proprietor: **SISVEL Technology Srl
10060 None (Torino) (IT)**

(72) Inventors:
• **Borio, Daniele
10093 Collegno Torino (TO) (IT)**
• **Camoriano, Laura
10073 Cirié (TO) (IT)**
• **Mulassano, Paolo
10141 Torino (TO) (IT)**

(74) Representative: **Dini, Roberto
Metroconsult S.r.l.
Via Sestriere 100
10060 None (TO) (IT)**

(56) References cited:
**US-B1- 6 229 998     US-B1- 6 407 699**

• **Z. JIANG, C. MA, G. LACHAPELLE: "Mitigation of
Narrow-band Interference on Software Receivers
Based on Spectrum Analysis" ION GNSS
PROCEEDINGS, 24 September 2004 (2004-09-24),
pages 144-155, XP002407597 USA**
• **VAN NEE D J R ET AL: "NEW FAST GPS CODE-
ACQUISITION TECHNIQUE USING FFT"
ELECTRONICS LETTERS, IEE STEVENAGE, GB,
vol. 27, no. 2, 17 January 1991 (1991-01-17), pages
158-160, XP000201210 ISSN: 0013-5194**
• **BORIO D ET AL: "Impact of the Acquisition
Searching Strategy on the Detection and False
Alarm Probabilities in a CDMA Receiver"
POSITION, LOCATION, AND NAVIGATION
SYMPOSIUM, 2006 IEEE/ION CORONADO, CA
APRIL 25-27, 2006, PISCATAWAY, NJ, USA,IEEE,
25 April 2006 (2006-04-25), pages 1100-1107,
XP010925042 ISBN: 0-7803-9454-2**
• **C. MA, G. LACHAPELLE, M.E. CANNON:
"Implementation of a Software GPS Receiver"
ION GNSS PROCEEDINGS, 24 September 2004
(2004-09-24), pages 956-970, XP002407598 USA**

**Description**

FIELD OF THE PRESENT INVENTION

The present invention relates to receivers for Global Navigation Satellite Systems. The invention, in particular, relates to the detection of interference in signals received by such receivers from navigation satellites employing time-frequency techniques.

DESCRIPTION OF THE PRIOR ART

An important issue of signal processing, in general, is the accurate determination of the frequencies and phases of transmitted and received signals. In the field of navigation/localization systems Global Navigation Satellite Systems (GNNS), as the Global Positioning System (GPS) and the European Galileo, are of growing importance. A GPS receiver, e.g., must be able to track the spread-spectrum signals, i.e. phase-modulated signals using bi-phase shift keying (BPSK) that it receives from GPS satellites with high accuracy. During the acquisition phase the carrier frequency and the phase angle of the coarse/acquisition (C/A code), for civil purposes, has to be determined. Accurate tracking of the carrier frequency and the Doppler shift caused by the relative velocity of the satellite with respect to the receiver are mandatory for an accurate determination of the position and velocity of the receiver. A rough estimation of the Doppler shift and of the code delay represents main tasks for an acquisition stage of a GNSS receiver. The maximum Doppler frequency for the L1 GPS signal having a frequency of 1575.42 MHz is about 5 kHz (for terrestrial applications).

Standard receivers track the C/A code phase by a Delay Locked Loop (DLL) and the carrier phase by a Phase Locked Loop (PLL). An apparatus employing both loops, called a signal tracking loop, is disclosed in US 5 222 843. Both loops represent feedback loops that align replica signals in the receiver with the actual received signal.

Typically, a PLL, usually in form of a Costas loop, consists of a numerically controlled oscillator, a carrier loop filter and a discriminator. The output of the discriminator is used to control the oscillator tuning the oscillation frequency so that the loop can continuously demodulate the received satellite signal. On the basis of the despreaded C/A code the signal output by the oscillator usually has both (inphase) I and (quadrature) Q channels. After correlating with the input signal, the signal from each channel is lowpass filtered.

More specifically, the code delay and the Doppler frequency are searched for in a two-dimensional search space given by $S(\tau, F_D) = S_I^2(\tau F_D) + S_Q^2(\tau F_D)$, where

$$S_I(\tau, F_D) = \frac{1}{N}\sum_{n=0}^{N-1} y_I[n, \tau, F_D]$$

and

$$S_Q(\tau, F_D) = \frac{1}{N}\sum_{n=0}^{N-1} y_Q[n, \tau, F_D]$$

are the in-phase and quadrature components resulting from the integration of

$$y_I[n, \tau, F_D] = x_R[n] x_{LOC}[n-\tau]\cos(2\pi F_D n)$$

$$y_Q[n, \tau, F_D] = x_R[n] x_{LOC}[n-\tau]\sin(2\pi F_D n)$$

obtained by the GNSS signal $x_R[n]$, a local replica $x_{LOC}[n]$ of the GNSS code delayed by $\tau$ and sinusoids at the frequency $F_D$.

The search space can also be formulated as a complex expression

$$S(\tau, F_D) = \left| \frac{1}{N} \sum_{n=0}^{N-1} x_R[n] x_{LOC}[n-\tau] \exp(-j2\pi F_D n) \right|^2,$$

that can be understood as the square absolute value of the Discrete Time Fourier Transform (DTFT) of the signal $x_R[n]$ $x_{LOC}[n-\tau]$ at the frequency $F_D$. $S(\tau, F_D)$ represents a spectrogram according to the definition given in "Time-Frequency Analysis", by L. Cohen, Signal Processing Series, Prentice Hall, 1994.

One may distinguish three search methods known in the art (see, e.g., "Fundamentals of Global Positioning System Receivers: A Software Approach", John Wiley and Sons, 2004). According to the classical serial search acquisition scheme the search space is evaluated cell by cell. Different values of code delay and Doppler shift are subsequently tested. According to the frequency domain FFT acquisition scheme Fast Fourier Transform (FFT) is used to evaluate all the Doppler frequencies in parallel. This scheme includes the analysis of frequency points outside the Doppler range. The time domain FFT acquisition scheme employs a circular convolution and represents also a scheme for evaluating all the Doppler frequencies in parallel.

Jiang et al., "Mitigation of Narrow-Band Interference on Software Receivers Based on Spectrum Analysis", ION GNSS 17th Int. Meeting of the Satellite Division, 21-24 September 2004, Long Beach, CA, USA, pages 144-155, discloses a narrowband RFI mitigation algorithm based on spectrum analysis employing an adaptive detection threshold as a function of the standard deviation of the normalized spectrum and the correlator power output.

US 6 407 699 discloses a GPS receiver and associated method that embodies high-dynamic, fast acquisition, and interference-suppressing capabilities for the reception and processing of GPS signals from a plurality of GPS satellites to produce GPS signal time and frequency parameters and navigation fixes. The GPS receiver includes an antenna and an analog front-end to intercept the incoming radio-frequency signal, band-limiting amplify the signal, and to convert it to an appropriate intermediate frequency so that it may be converted to digital form. One or more high-speed digital signal processors (DSP) constitute an all digital software baseband processor that process the sampled and quantified signals to form a two-dimensional delay-Doppler map of correlation power and to extract the signal time and frequency parameters and navigation data. The baseband processor performs the incoming signal time-tagging, transformation, replica generation, interference-suppressing, delay-Doppler mapping and frequency uncertainty planning.

However, due to the presence of interferences the above described conventional acquisition processes are not sufficiently reliable and cannot be carried out as fast as it is desired. Thus, there is a need to enhance the reliability of present methods for data acquisition and to efficiently detect interferences. It is, therefore, a problem underlying the present invention to provide a more reliable and faster method as compared to the art for acquiring data and detecting interference in the context of GNSS receivers.

SUMMARY OF THE PRESENT INVENTION

The above-mentioned problem is solved by a method according to claim 1. The inventive method for detection of interference in a Global Navigation Satellite System, GNSS, signal received from a navigation satellite, comprises generating a local replica of the GNSS signal that is time-delayed with respect to the GNSS signal;
providing a window signal;
calculating a search spectrogram based on the received GNSS signal and the local replica of the GNSS signal or an interference detection spectrogram based on the received GNSS signal and the window signal;
switching between a local replica of the received GNSS signal delayed by a predetermined time-delay $\tau$ with respect to the received GNSS signal and the window signal in order to switch between a signal acquisition process and an interference detection process;
detecting interference by means of the interference detection spectrogram.

The GNSS signal can, in particular, be a GPS signal. The window signal can, e.g., be a Hammond's window or a Hanning's window or a Blackman window and can either be generated by a window generator or read from a window memory bank comprising at least one window signal.

Whereas a commonly used acquisition unit included in a GNSS receiver performs signal acquisition on the basis of a spectrogram (search space) calculated from the received GNSS signal and a time-delayed local replica of this signal, the herein disclosed method for detecting interference, i.e. perturbations in the search space, uses a window function in place of the time-delayed local replica in order to obtain a different (interference detection) spectrum that is useful for the detection of interference. Usage of the (analysis) window signal provides a very efficient and relatively fast method for interference detection based on the received signal spectrogram.

The spectrogram is readily obtained by a discrete convolution of the received GNSS signal multiplied by a

sinusoid sin($2\pi F_D n$) and cos($2\pi F_D n$), respectively, and a window function resulting in the so-called in-phase and quadrature components and subsequently adding the squares of these components and can, thus, be expressed as

$$S(\tau, F_D) = \left| \frac{1}{N} \sum_{n=0}^{N-1} x_R[n] w[n-\tau] \exp(-j2\pi F_D n) \right|^2$$

where $\tau$ is a time-delay of a generated local replica of the GNSS signal with respect to the GNSS signal $x_R[n]$, $F_D$ is a predetermined frequency, n is a discrete time index and N is the length of the window signal w[n]. It is preferred that the length of the window is equal to the length of the received GNSS signal and of the local replica used for the determination of the Doppler frequency and the code delay. The window signal is progressively delayed by some predetermined time-delay. Thus, a time-frequency analysis is performed for the detection of interference.

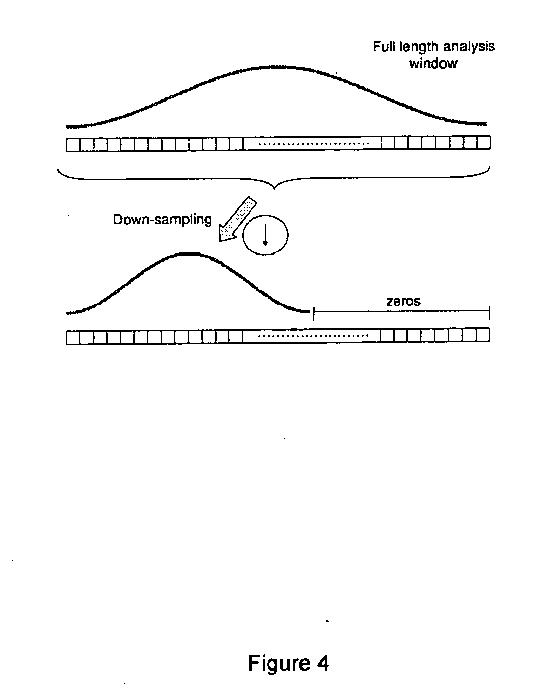

The window signal that is used for obtaining the (interference detection) spectrogram can be derived from a window signal stored in a memory by downsampling the stored window signal to a predetermined range of sampling instants (indexed by n) of the GNSS signal and adding zeros for sampling instants outside the predetermined range (see also description below with reference to Figure 4). An accordingly sampled window signal can also be generated by a window generator. Usage of such a window results in an increased spectrogram time resolution.

In the herein described examples for the inventive method it is possible to choose a time-delay $\tau$ that progressively assumes values $\tau = n \, \Delta\tau$ with a time-delay step $\Delta\tau$ larger than one signal sample. A choice of such a relatively large time-delay allows for faster computation and results in downsampled versions of the spectrogram that can be used for a fast and processor load saving preliminary analysis.

A simple way of detecting interference by means of the spectrogram obtained by means of a window function is comparison of each cell of the spectrogram with a predetermined threshold. In this case, the presence of interference is detected by determining whether a cell of the spectrogram exceeds a predetermined interference threshold.

It has been proven that a suitable choice for the interference threshold is (as will be discussed in more detail below) is

$$V_t = -\frac{\sigma_\mu^2 E_w}{N^2} \log(P) \,,$$

where $\sigma_\mu^2$, $E_w$, N and P denote the variance of Gaussian noise present in the GNSS signal, the energy of the window signal, the length of the window signal and a predetermined interference false alarm probability, respectively. Thus, the interference threshold $V_t$ is set according to the probability that a cell causes a detection event, even if the search space, i.e. a spectrogram obtained on the basis of a time-delayed local replica of the GNSS signal rather than a window signal, shows no perturbations.

The inventive interference detection method can be used in combination with standard acquisition schemes as, e.g., the classical serial search, the parallel frequency domain FFT acquisition scheme and the parallel time domain FFT acquisition scheme (see above). Thus, according to one example of the inventive method calculating the spectrogram comprises the steps of
generating two sinusoids sin($2\pi F_D n$) and cos($2\pi F_D n$) with a predetermined frequency $F_D$ by means of a frequency generator;
generating from the received GNSS signal $x_R[n]$ and from the window signal w[n] a signal

$$S_I(\tau, F_D) = \frac{1}{N} \sum_{n=0}^{N-1} x_R[n] w[n-\tau] \cos(2\pi F_D n) \,;$$

and a signal

$\quad S_Q(\tau, F_D) = \dfrac{1}{N} \sum_{n=0}^{N-1} x_R[n] w[n-\tau] \sin(2\pi F_D n) \,,$ where N is the length of the window signal and $\tau$ is

a time-delay of the window signal with respect to the GNSS signal $x_R[n]$; and calculating $S_I^2(\tau, F_D) + S_Q^2(\tau, F_D)$.

According to another example calculating the spectrogram comprises the steps of short-time Fourier transforming the received GNSS signal by means of the window signal to obtain a short-time Fourier transform and summing up the square of the real part of the short-time Fourier transform and the square of the imaginary part of the short-time Fourier transform. Downsampling may be performed before performing a Fast Fourier transformation that is employed in the short-time Fourier transformation of the received GNSS signal by means of the window signal (integrate and dump).

According to still another example calculating the spectrogram comprises the steps of generating two sinusoids $\sin(2\pi F_D n)$ and $\cos(2\pi F_D n)$ with a predetermined frequency $F_D$ by means of a frequency generator and performing a circular convolution of the GNSS signal by means of the window signal and the sinusoids $\sin(2\pi F_D n)$ and $\cos(2\pi F_D n)$.

The disclosed examples can be implemented in already existing acquisition units of GNSS (GPS) or Galileo receivers. In a particularly preferred embodiment switching between a local replica of the received GNSS signal delayed by a predetermined time-delay $\tau$ with respect to the received GNSS signal and the window function is performed in order to switch between a signal acquisition process and an interference detection process. Either the local replica of the received GNSS signal or the window function is used to calculate the spectrogram. Switching between an acquisition operation mode and an interference detection mode automatically or by an operator is thereby enabled.

The present invention also provides a computer program product comprising one or more computer readable media having computer-executable instructions for performing the steps of one of the above described examples for the inventive method.

Moreover, the above mentioned problem is also solved by a GNSS acquisition means according to claim 14 that is configured to receive a GNSS signal from a navigation satellite, comprising

a code generator configured to generate a local replica of the GNSS signal that is time-delayed with respect to the GNSS signal;

a memory bank configured to store at least one window signal and/or a window generator configured to generate a window signal;

a processing unit configured to calculate a search spectrogram based on the received GNSS signal and the local replica of the GNSS signal or an interference detection spectrogram based on the received GNSS signal and a window signal read from the memory bank or generated by the window generator;

a switching means configured to provide the processing unit with either the local replica of the GNSS signal or the window signal; and

a detection means configured to receive the interference detection spectrogram from the processing unit and to detect interference by means of the interference detection spectrogram.

This acquisition means can perform normal signal acquisition as known in the art by making use of a standard spectrogram (or search space) or it can perform interference detection by means of a different spectrogram based on a window signal that is herein sometimes referred to as an interference detection spectrogram for clear discrimination from the usual search space. The switching means may also control whether or not a window generator is caused to generate a window signal or whether a window signal is to be read from a memory bank.

The interference detection spectrogram calculated by the processing unit can be expressed as

$$S(\tau, F_D) = \left| \frac{1}{N} \sum_{n=0}^{N-1} x_R[n] w[n - \tau] \exp(-j 2\pi F_D n) \right|^2$$

where $\tau$ is a time-delay of the window signal with respect to the GNSS signal $x_R[n]$, $F_D$ is a predetermined frequency, n is a discrete time index and N is the length of the window signal w[n].

The processing unit may be configured to calculate the interference detection spectrogram based on a window signal derived from a window signal stored in the memory by downsampling the stored window signal to a predetermined range of sampling instants of the GNSS signal and adding zeros for sampling instants outside the predetermined range.

In a simple case, the detection means can be configured to detect interference by determining whether a cell of the interference detection spectrogram exceeds a predetermined interference threshold. The interference threshold may, in particular, be given by

$V_t = -\dfrac{\sigma_\mu^2 E_w}{N^2} \log(P)$ (see above for the notation used in this formula).

According to different embodiments, the inventive GNSS signal acquisition means may further comprise a frequency generator configured to generate two sinusoids $\sin(2\pi F_D n)$ and $\cos(2\pi F_D n)$ with a predetermined frequency $F_D$ and the processing means may be configured to generate from the received GNSS signal $x_R[n]$ and from the window signal w[n] a signal

$$S_I(\tau, F_D) = \frac{1}{N} \sum_{n=0}^{N-1} x_R[n] w[n-\tau] \cos(2\pi F_D n) ;$$

and a signal

$$S_Q(\tau, F_D) = \frac{1}{N} \sum_{n=0}^{N-1} x_R[n] w[n-\tau] \sin(2\pi F_D n) ,$$ where N is the length of the window signal and $\tau$ is a time-delay of the window signal with respect to the GNSS signal $x_R[n]$ and to calculate $S_I^2(\tau, F_D) + S_Q^2(\tau, F_D)$ or it may alternatively further comprise a Fourier transformation means configured to short-time Fourier transform the received GNSS signal by means of the window signal to obtain a short-time Fourier transform and wherein the processing means is configured to sum up the square of the real part of the short-time Fourier transform and the square of the imaginary part of the short-time Fourier transform. The short-time Fourier transformation means may include a Fast Fourier Transformation means and the Fast Fourier Transformation may be performed for a downsampled signal obtained from the multiplied received GNSS signal and the window signal.

Furthermore, the inventive GNSS signal acquisition means may comprise a frequency generator configured to generate two sinusoids $\sin(2\pi F_D n)$ and $\cos(2\pi F_D n)$ with a predetermined frequency $F_D$ and the processing means may be configured to perform a circular convolution of the GNSS signal by means of the window signal and the sinusoids $\sin(2\pi F_D n)$ and $\cos(2\pi F_D n)$.

In addition, the present invention provides a receiver configured to receive a GNSS signal, in particular, a GPS receiver, comprising a GNSS signal acquisition means according to one of the above mentioned examples.

BRIEF DESCRIPTION OF THE DRAWINGS

Fig. 1 illustrates an example for an implementation of the inventive method for interference detection wherein a window signal generated by a window generator is employed in a serial search acquisition unit.

Fig. 2 illustrates an example for an implementation of the inventive method for interference detection wherein a window signal generated by a window generator is incorporated in parallel search acquisition in the frequency domain.

Fig. 3 illustrates an example for an implementation of the inventive method for interference detection wherein a window signal generated by a window generator is incorporated in parallel search acquisition in the time domain.

Fig. 4 illustrates downsampling of a window signal stored in a memory bank.

Fig. 5 shows a spectrogram for a GPS signal obtained by an example of the inventive method for interference detection in the absence of interfering.

Fig. 6 shows a spectrogram for a GPS signal obtained by an example of the inventive method for interference detection in the presence of sinusoidal interfering.

DETAILED DESCRIPTION

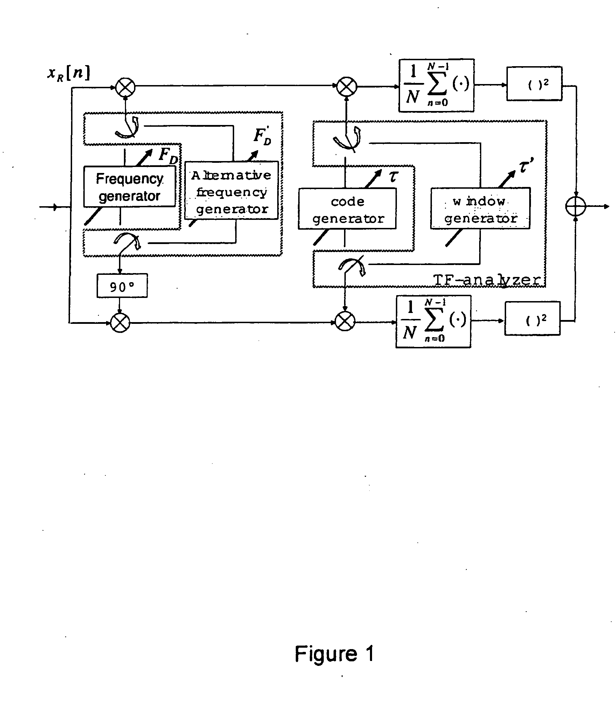

Figure 1 illustrates the operation of window generator in an acquisition unit of a GPS receiver configured for a serial search acquisition. A GNSS signal $x_R[n]$ with a length N (number of sampling instants) is received. A frequency generator is employed for generating two sinusoids $\sin(2\pi F_D n)$ and $\cos(2 F_D n)$ with a predetermined frequency $F_D$. An alternative frequency generator is present that is discussed below.

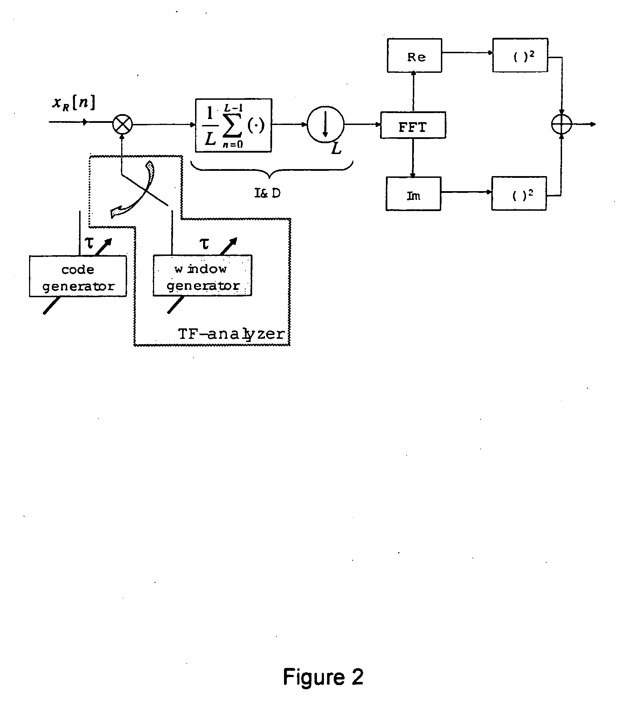

A window generator generates a window signal, e.g., a Hamming's window. The window signal is multiplied with the received GNSS signal $x_R[n]$ and with $\sin(2\pi F_D n)$ (upper branch in Figure 1) and $\cos(2\pi F_D n)$ (lower branch in Figure 2). The multiplication is performed for each sampling instant n and is followed by summation over n and normalization by the signal length N. According to this example the length of the window signal w[n] is equal to the length of the $x_R[n]$. Both sums are squared and the squared sums are added to obtain the desired spectrogram for interference detection.

In the present example a code generator and a switching means for switching between the code generator and the window generator are also provided. Thus, an operator is enabled to switch from a normal acquisition mode (as known in the art) to the inventive interference detection process by means of a window signal. The switching may also be performed automatically. In the acquisition mode a spectrogram is obtained which represents the search space that can, e.g., be used for performing the two-dimensional search for the code time delay and Doppler frequency as known in the art (see, e.g., "Global Positioning System Receivers: Measurement and Performance", P. Misra and P. Enge, Ganga-Jamuna Press, 2001).

Moreover, an alternative frequency generator is provided for the reason that there is a need of changing the Doppler step $\Delta F$ (or alternatively the number of Doppler bins) in order to explore the entire GPS (or more generally GNSS) receiver band, whereas usually only a narrow frequency range is considered for determining Doppler frequencies.

A GPS receiver works at some intermediate frequency $f_{IF}$ and all interferences included in down-conversion into the frequency range $[f_{IF} - B/2, f_{IF} + B/2]$, where B denotes the width of the received band, are detected by the receiver and can, thus, deteriorate the localization process. The Doppler frequencies that are usually explored by the acquisition unit of the receiver are in the range $[f_{IF} - (L-1) / 2 \ \Delta F, f_{IF} + (L-1) / 2 \ \Delta F]$, where L is the number of Doppler bins (here, this number is supposed to be an odd number) resulting in a width of the Doppler frequency range to be explored of $B_D$ = (L-1) $\Delta F$.

Exploration of the entire GNSS receiver demands for either increasing the number of Doppler bins to L'= (B / $\Delta F$) + 1, which would increase the processor load significantly, or for a greater Doppler step of $\Delta F' = B / (L-1)$ thereby reducing the resolution in the frequency dimension. A compromise can be implemented by changing both the Doppler step and the number of Doppler bins satisfying the condition B = (L' - 1) $\Delta F'$. The alternative signal generator of Figure 1 allows for changing the Doppler step.

The spectrogram obtained by means of a window signal as described above is used for the detection of interferences. According to a simple implementation some interference is declared when a cell of the spectrogram exceeds a predetermined threshold that is fixed in order to avoid a false alarm, i.e. a detection of an interference even if the search space, in fact, exhibits no perturbation signals.

According to the present example, the spectrogram is given for a fixed frequency $F_D$ and a code delay $\tau$ by $S(\tau, F_D) = S_I^2(\tau, F_D) + S_Q^2(\tau, F_D)$, where

$$S_I(\tau, F_D) = \frac{1}{N}\sum_{n=0}^{N-1} y_I[n,\tau,F_D]$$

and

$$S_Q(\tau, F_D) = \frac{1}{N}\sum_{n=0}^{N-1} y_Q[n,\tau,F_D]$$

are the in-phase and quadrature components resulting from the integration of

$$y_I[n,\tau,F_D] = x_R[n]w[n-\tau]\cos(2\pi F_D n)$$

$$y_Q[n,\tau,F_D] = x_R[n]w[n-\tau]\sin(2\pi F_D n)$$

with the window signal w.

A useful threshold for the detection of interferences can be chosen in view of the following considerations.

In the absence of any interference $x_R[n]$ is given by the useful GNSS signal delayed by some time delay and modulated by some unknown frequency including the navigation message and Gaussian noise $\eta[n]$. The variance $\sigma^2_\eta$ of the Gaussian noise, which substantially constitutes the signal fed in the acquisition unit of the receiver is substantially given by the spectral density power times the width of the GPS or Galileo (GNSS) receiver band, (it can be also a dual standard GNSS receiver) if dispreading of the received GNSS signal is not correctly performed.

Moreover, the spectrogram $S(\tau, F_D)$ can be expressed by the Short Time Fourier Transform $S_F(\tau, F_D)$ of the received GNSS signal $x_R[n]$ as $S(\tau, F_D) = \text{Re}(S_F(\tau, F_D))^2 + \text{Im}(S_F(\tau, F_D))^2$, where Re and Im denote the real and imaginary parts of the complex expression, respectively.

The variance of the Short Time Fourier Transform $S_F(\tau, F_D)$ is given by $E_w \sigma^2_\eta, / N^2$ with the energy $E_w$ of the

window signal $\sum_{m=0}^{N-1} |w[n]|^2$.

The square absolute value of a zero mean complex Gaussian random variable is distributed $\sim \exp(N^2 / E_w \sigma^2_\eta)$ where the argument of the exponential function is the reciprocal value of the variance of $S_F(\tau, F_D)$. The probability density function of $S(\tau, F_D)$ can, thus, be expressed by

$f_s(s) = (N^2 / E_w \sigma^2_\eta)\exp(- s\, N^2 / E_w \sigma^2_\eta)$ which results in an interference false alarm probability for an interference threshold $V_t$

$$P(V_t) = \int_{V_t}^{\infty} f_S(s)\,ds = \exp(- V_t\, N^2 / E_w\, \sigma^2_\eta)$$

Inversion of the above formula results in the expression

$$V_t = -\frac{\sigma_\mu^2 E_w}{N^2}\log(P)$$

for the interference threshold that can advantageously chosen in all herein discussed examples of the invention.

Figure 2 illustrates another example for an implementation of the inventive method. In this example parallel acquisition in the frequency domain is performed. The received GNSS signal $x_R[n]$ multiplied with a window signal provided by a window generator. The resulting signal is downsampled to a length L and subsequently Fast Fourier transformed. In fact, a so-called Integrate & Dump procedure is performed. The squares of the real and imaginary parts of the Fourier transformed signal are summed to obtain the spectrogram used for the detection of interferences.

Again, a switching means is provided for switching between the window generator and a code generator providing a local time-delayed replica of the GNSS signal, i.e. switching between the acquisition mode and the interference detection mode. An example for a simple window signal generated by the window generator is $w[n] = 1$, for $n = 0, .., K -1$, and $w[n] = 0$, for $n = K, .., N - 1$, where K and N are the lengths of the window signal and the local code, respectively.

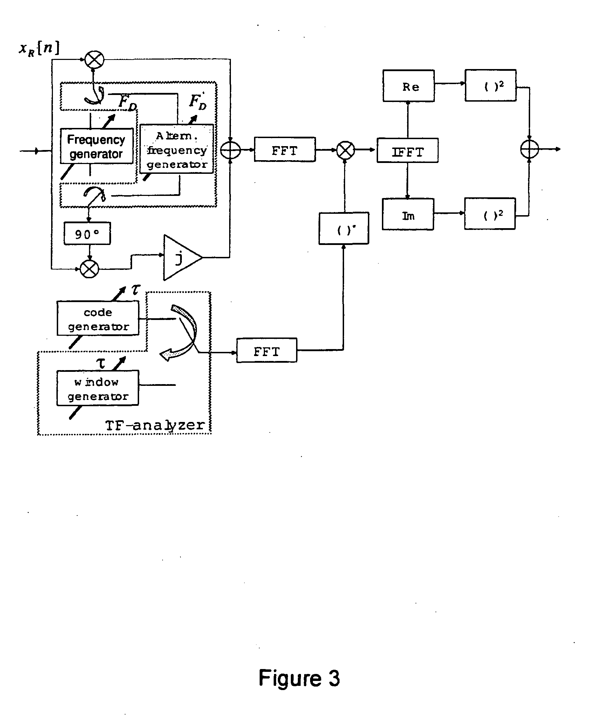

According to a third example, parallel signal acquisition is performed in the time domain. As shown in Figure 3, a signal can be generated from the received GNSS signal $x_R[n]$ multiplied by sinusoids (cf. description of Fig. 1). As in the example described with reference to Fig. 1 and for the same reasons an alternative frequency generator can be employed. A window generator generates a window signal. Again a switching means for switching between the acquisition and the interference detection modes, one making use of a local time delayed replica of the received GNSS signal, the other one making use of the window signal, is provided.

Circular convolution of the signal generated from the received GNSS signal $x_R[n]$ multiplied by sinusoids and the window signal (or the local replica depending on the operation of the switching means) is performed. For this, the signals are Fast Fourier transformed, multiplied and then inverse Fast Fourier transformed. As in the example described with reference to Figure 2, the spectrogram is obtained as a sum of the squared real and imaginary parts of the resulting signal.

In the above examples instead of a window generator a window memory bank storing window signals that are read out when necessary can be employed. Suitable windows are, e.g., Hamming's window, Hanning's window or a Blackman's window. As shown in Figure 4, the actually used window signal may be downsampled when a "shorter" window is needed to increase the spectrogram time resolution. For the sampling instants that are not considered by the downsampling zeros are included.

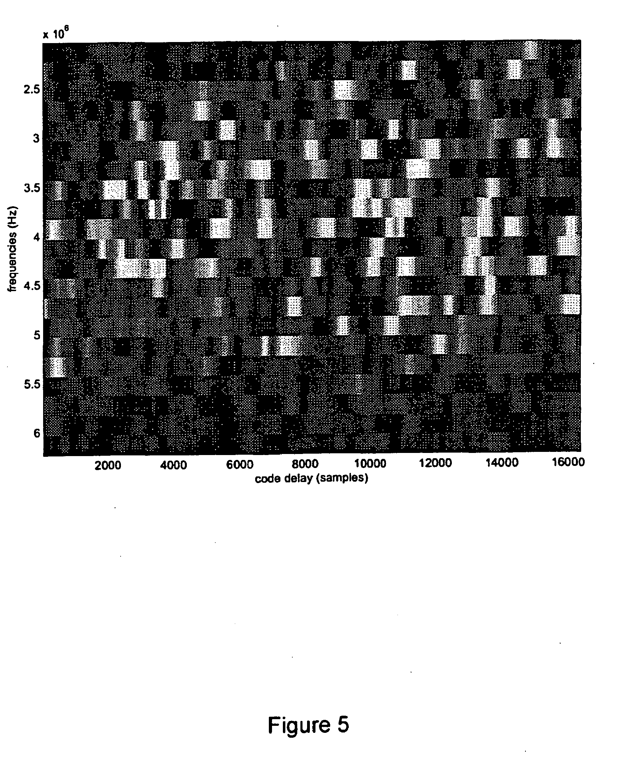

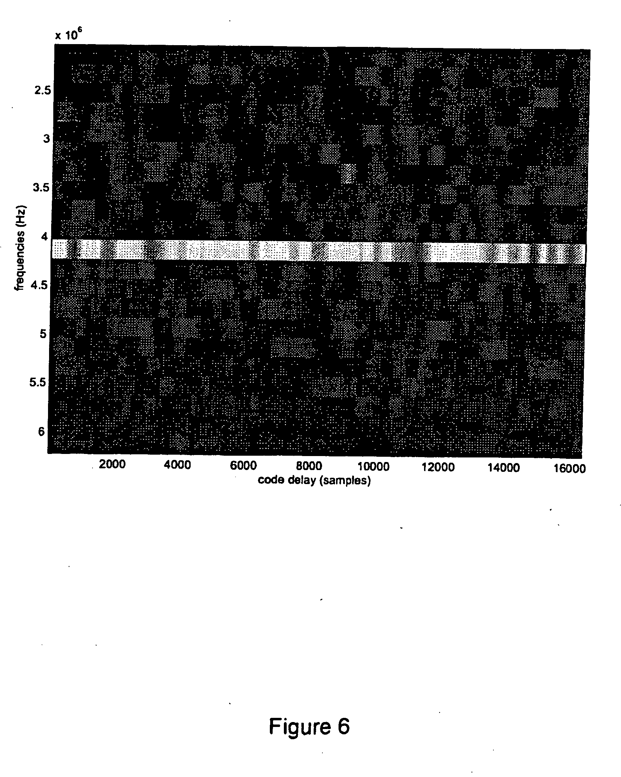

Figures 5 and 6 show spectrograms obtained by the illustrated by Figure 3. A Hamming window signal, a Doppler step $B / (L-1)$ of 200 kHz, a number of Doppler bins of 21 and a local code length of $N = 16368$ are used. The length of the Hamming window was chosen as 1024 sampling instants.

Specifications of the used NordNav GPS receiver are a sampling frequency of 16.3676 MHz, an intermediate frequency of 4.1304 MHz, a sampling rate of 15.996 samples/chip, a receiver bandwidth of 4 MHz and 4 quantization bits.

Figure 5 shows an obtained spectrogram of a GPS signal in the absence of interfering. No particular pattern can be recognized. A larger number of noise peaks can be observed around the intermediate frequency.

Figure 6 shows an obtained spectrogram of a GPS signal in the presence of a sinusoidal interfering. As can be seen from the Figure a prominent spectral line near the intermediate frequency, where the interfering was located, is present and, thus, the interfering is clearly revealed by the inventive method.

## Claims

1. Method for detecting interference in a Global Navigation Satellite System, GNSS, signal received from a navigation satellite, comprising generating a local replica of the GNSS signal that is time-delayed with respect to the GNSS signal; providing a window signal; calculating a search spectrogram based on the received GNSS signal and the local replica of the GNSS signal or an interference detection spectrogram based on the received GNSS signal and the window signal; switching between a local replica of the received GNSS signal delayed by a predetermined time-delay $\tau$ with respect to the received GNSS signal and the window signal in order to switch between a signal acquisition process and an interference detection process; detecting interference by means of the interference detection spectrogram.

2. The method according to claim 1, wherein the interference detection spectrogram is given by

$$S(\tau, F_D) = \left| \frac{1}{N} \sum_{n=0}^{N-1} x_R[n] w[n-\tau] \exp(-j 2\pi F_D n) \right|^2$$

where $\tau$ is a time-delay of a generated local replica of the GNSS signal with respect to the GNSS signal $x_R[n]$, $F_D$ is a predetermined frequency, n is a discrete time index and N is the length of the window signal $w[n]$.

3. The method according to claim 1 or 2, wherein the window signal is read from a memory storing at least one window signal, in particular, a Hamming's window or a Hanning's window or a Blackman's window, or is generated by a signal generator.

4. The method according to any one of the preceding claims, wherein the window signal is derived from a window signal stored in a memory by downsampling the stored window signal to a predetermined range of sampling instants of the GNSS signal and adding zeros for sampling instants outside the predetermined range.

5. The method according to any one of the preceding claims, wherein the time-delay $\tau$ assumes values $\tau = n \, \Delta\tau$ with a time-delay step $\Delta\tau$ larger than one signal sample.

6. The method according to any one of the preceding claims, wherein the presence of interference is detected by determining whether a cell of the interference detection spectrogram exceeds a predetermined interference threshold.

7. The method according to claim 6, wherein the interference threshold $V_t$ is given by

$$V_t = -\frac{\sigma^2{}_\mu E_w}{N^2} \log(P),$$

where $\sigma_\mu{}^2$, $E_W$, N and P denote the variance of Gaussian noise present in the GNSS signal, the energy of the window signal, the length of the window signal and a predetermined interference false alarm probability, respectively.

8. The method according to any one of the preceding claims, wherein calculating the interference detection spectrogram comprises the steps of generating two sinusoids $sin(2\pi F_D n)$ and $cos(2\pi F_D n)$ with a predetermined frequency $F_D$ by means of a frequency generator;

generating from the received GNSS signal $x_R[n]$ and from the window signal $w[n]$ a signal

$$S_I(\tau, F_D) = \frac{1}{N} \sum_{n=0}^{N-1} x_R[n] w[n-\tau] \cos(2\pi F_D n);$$

and a signal

$$S_Q(\tau, F_D) = \frac{1}{N} \sum_{n=0}^{N-1} x_R[n] w[n-\tau] \sin(2\pi F_D n),$$

where N is the length of the window signal and $\tau$ is a time-delay of the window signal with respect to the GNSS signal $x_R[n]$; and
calculating $S_I^2(\tau, F_D) + S_Q^2(\tau, F_D)$.

9. The method according to any one of the claims 1 to 8, wherein calculating the interference detection spectrogram comprises the steps of
short-time Fourier transforming the received GNSS signal by means of the window signal to obtain a short-time Fourier transform; and
adding the square of the real part of the short-time Fourier transform and the square of the imaginary part of the short-time Fourier transform.

10. The method according to claim 9, wherein the short-time Fourier transformation of the received GNSS signal by means of the window signal is performed by a Fast Fourier transformation and downsampling is performed before the Fast Fourier transformation.

11. The method according to any one of the claims 1 to 8, wherein calculating the interference detection spectrogram comprises the steps of
generating two sinusoids $sin(2\pi F_D n)$ and $cos(2\pi F_D n)$ with a predetermined frequency $F_D$ by means of a frequency generator; and
performing a circular convolution of the GNSS signal by means of the window signal and the sinusoids $sin(2\pi F_D n)$ and $cos(2\pi F_D n)$.

12. The method according to any one of the preceding claims, further comprising the step of controlling whether or not a window generator is caused to generate said window signal or whether said window signal is to be read from a memory bank.

13. Computer program product, comprising one or more computer readable media having computer-executable instructions for performing the steps of the method according to any one of the claims 1 to 12.

14. Global Navigation Satellite System, GNSS, signal acquisition means configured to receive a GNSS signal from a navigation satellite, comprising a code generator configured to generate a local replica of the GNSS signal that is time-delayed with respect to the GNSS signal;
a memory bank configured to store at least one window signal and/or a window generator configured to generate a window signal;
a processing unit configured to calculate a search spectrogram based on the received GNSS signal and the local replica of the GNSS signal or an interference detection spectrogram based on the received GNSS signal and a window signal read from the memory bank or generated by the window generator;
a switching means configured to provide the processing unit with either the local replica of the GNSS signal or the window signal; and
a detection means configured to receive the interference detection spectrogram from the processing unit and to detect interference by means of the interference detection spectrogram.

15. The GNSS signal acquisition means according to claim 14, wherein the interference detection spectrogram calculated by the processing unit is given by

$$S(\tau, F_D) = \left| \frac{1}{N} \sum_{n=0}^{N-1} x_R[n]w[n-\tau]\exp(-j2\pi F_D n) \right|^2$$

where $\tau$ is a time-delay of a generated local replica of the GNSS signal with respect to the GNSS signal $x_R[n]$, $F_D$ is a predetermined frequency, n is a discrete time index and N is the length of the window signal $w[n]$.

16. The GNSS signal acquisition means according to claim 14 or 15, wherein the processing unit is configured to calculate the interference detection spectrogram based on a window signal derived from a window signal stored in the memory by downsampling the stored window signal to a predetermined range of sampling instants of the GNSS signal and adding zeros for sampling instants outside the predetermined range.

17. The GNSS signal acquisition means according to any one of the claims 14 - 16, wherein said local replica of the GNSS signal is delayed by a time-delay $\tau$ assuming values $\tau = n \, \Delta\tau$ with a time-delay step $\Delta\tau$ larger than one signal sample.

18. The GNSS signal acquisition means according to any one of the claims 14 to 17, wherein the detection means is configured to detect interference by determining whether a cell of the interference detection spectrogram exceeds a predetermined interference threshold.

19. The GNSS signal acquisition means according to claim 18, wherein the interference threshold Vt is given by

$$V_t = -\frac{\sigma_\mu^2 E_w}{N^2}\log(P),$$

where $\sigma_\mu^2$, Ew, N and P denote the variance of Gaussian noise present in the GNSS signal, the energy of the window signal, the length of the window signal and a predetermined interference false alarm probability, respectively.

20. The GNSS signal acquisition means according to any one of the claims 13 to 19, further comprising a frequency generator configured to generate two sinusoids $sin(2\pi F_D n)$ and $cos(2\pi F_D n)$ with a predetermined frequency $F_D$; and wherein
the processing means is configured to generate from the received GNSS signal $x_R[n]$ and from the window signal $w[n]$ a signal

$$S_I(\tau, F_D) = \frac{1}{N}\sum_{n=0}^{N-1} x_R[n]w[n-\tau]\cos(2\pi F_D n);$$

and a signal

$$S_Q(\tau, F_D) = \frac{1}{N}\sum_{n=0}^{N-1} x_R[n]w[n-\tau]\sin(2\pi F_D n),$$

where N is the length of the window signal and $\tau$ is a time-delay of the window signal with respect to the GNSS signal xR[n] and to calculate the spectrogram $S(\tau, F_D) = S_I^2(\tau, F_D) + S_Q^2(\tau, F_D)$.

21. The GNSS signal acquisition means according to any one of the claims 14 to 19, further comprising a Fourier transformation means configured to short-time Fourier transform the received GNSS signal by means of the window signal to obtain a short-time Fourier transform and wherein the processing means is configured to sum up the square of the real part of the short-time Fourier transform and the square of the imaginary part of the short-time Fourier transform.

22. The GNSS signal acquisition means according to claim 21, further comprising a downsampling means configured to downsample a signal that is input in the Fourier transformation means for short-time Fourier transformation.

23. The GNSS signal acquisition means according to any one of the claims 14 to19, further comprising a frequency generator configured to generate two sinusoids $sin(2\pi F_D n)$ and $cos(2\pi F_D n)$ with a predetermined frequency $F_D$ and wherein the processing unit is configured to perform a circular convolution of the GNSS signal by means of the window signal and the sinusoids $sin(2\pi F_D n)$ and $cos(2\pi F_D n)$.

24. The GNSS signal acquisition means according to any one of the claims 14 to 23, wherein said switching means controls whether or not said window generator is caused to generate said window signal or whether said window signal is to be read from said memory bank.

25. Receiver configured to receive a GNSS signal, in particular, a GPS receiver, comprising a GNSS signal acquisition means according to any one of the claims 14 to 24.

**Patentansprüche**

1. Verfahren zum Detektieren von Interferenz in einem GNSS-Signal, wobei GNSS für globales Satellitennavigationssystem steht, welches von einem Navigationssatelliten empfangen wurde, umfassend:

   Erzeugen einer lokalen Kopie des GNSS-Signals, die in Bezug auf das GNSS-Signal zeitverzögert ist;
   Bereitstellen eines Fenstersignals;
   Berechnen eines Suchspektrogramms basierend auf dem empfangenen GNSS-Signal und der lokalen Kopie des GNSS-Signals oder Berechnen eines Interferenzdetektionsspektrogramms basierend auf dem empfangenen GNSS-Signal und dem Fenstersignal;
   Umschalten zwischen einer lokalen Kopie des empfangenen GNSS-Signals, die in Bezug auf das empfangene GNSS-Signal um eine vorbestimmte Zeitverzögerung $\tau$ verzögert ist, und dem Fenstersignal, um zwischen einem Signalerfassungsprozess und einem Interferenzdetektionsprozess umzuschalten;
   Detektieren von Interferenz mittels des Interferenzdetektionsspektrogramms.

2. Verfahren nach Anspruch 1, wobei das Interferenzdetektionsspektrogramm gegeben ist durch

$$S(\tau, F_D) = \left| \frac{1}{N} \sum_{n=0}^{N-1} x_R[n] w[n-\tau] \exp(-j 2\pi F_D n) \right|^2 ,$$

wobei $\tau$ eine Zeitverzögerung einer erzeugten lokalen Kopie des GNSS-Signals in Bezug auf das GNSS-Signal $x_R[n]$ ist, $F_D$ eine vorbestimmte Frequenz ist, $n$ ein diskreter Zeitindex ist, und N die Länge des Fenstersignals w[n] ist.

3. Verfahren nach Anspruch 1 oder 2, wobei das Fenstersignal von einem Speicher gelesen wird, der zumindest ein Fenstersignal speichert, insbesondere, ein Hamming-Fenster oder ein Hanning-Fenster oder ein Blackman-Fenster, oder von einem Signalgenerator erzeugt wird.

4. Verfahren nach einem der vorangegangenen Ansprüche, wobei das Fenstersignal von einem in einem Speicher gespeicherten Fenstersignal abgeleitet wird, indem das gespeicherte Fenstersignal auf einen vorbestimmten Bereich von Abtastzeitpunkten des GNSS-Signals heruntergetastet wird und für Abtastzeitpunkte außerhalb des vorbestimmten Bereichs Nullen hinzugefügt werden.

5. Verfahren nach einem der vorangegangenen Ansprüche, wobei die Zeitverzögerung $\tau$ Werte $\tau = n\Delta\tau$ mit einem Zeitverzögerungsschritt $\Delta\tau$ größer als ein Signalabtastwert annimmt.

6. Verfahren nach einem der vorangegangenen Ansprüche, wobei das Vorhandensein von Interferenz detektiert wird, indem bestimmt wird, ob eine Zelle des Interferenzdetektionsspektrogramms einen vorbestimmten Interferenzschwellwert überschreitet.

7. Verfahren nach Anspruch 6, wobei der Interferenzschwellwert $V_t$ gegeben ist durch

$$V_t = -\frac{\sigma_\mu{}^2 E_w}{N^2}\log(P) \, ,$$

wobei $\sigma_\mu{}^2$, $E_W$, $N$ und $P$ jeweils die Varianz des in dem GNSS-Signal vorhandenen Gaußschen Rauschens, die Energie des Fenstersignals, die Länge des Fenstersignals, und eine vorbestimmte Interferenzfehlalarmwahrscheinlichkeit angeben.

8. Verfahren nach einem der vorangegangenen Ansprüche, wobei das Berechnen des Interferenzdetektionsspektrogramms die Schritte umfasst:

   Erzeugen von zwei Sinusschwingungen $sin(2\pi F_D n)$ und $cos(2\pi F_D n)$ mit einer vorbestimmten Frequenz $F_D$ mittels eines Frequenzgenerators;
   Erzeugen, aus dem empfangenen GNSS-Signal $x_R[n]$ und aus dem Fenstersignal $w[n]$, eines Signals

$$S_I(\tau, F_D) = \frac{1}{N}\sum_{n=0}^{N-1} x_R[n]w[n-\tau]\cos(2\pi F_D n)$$

   und eines Signals

$$S_Q(\tau, F_D) = \frac{1}{N}\sum_{n=0}^{N-1} x_R[n]w[n-\tau]\sin(2\pi F_D n) \, ,$$

   wobei $N$ die Länge des Fenstersignals ist und $\tau$ eine Zeitverzögerung des Fenstersignals in Bezug auf das GNSS-Signal $x_R[n]$ ist; und

$$\text{Berechnen von } S_I{}^2(\tau, F_D) + S_Q{}^2(\tau, F_D).$$

9. Verfahren nach einem der Ansprüche 1 bis 8, wobei das Berechnen des Interferenzdetektionsspektrogramms die Schritte umfasst:

   Kurzzeit-Fourier-Transformieren des empfangenen GNSS-Signals mittels des Fenstersignals, um eine Kurzzeit-Fourier-Transformation zu erhalten; und
   Addieren des Quadrats des Realteils der Kurzzeit-Fourier-Transformation und des Quadrats des Imaginärteils der Kurzzeit-Fourier-Transformation.

10. Verfahren nach Anspruch 9, wobei die Kurzzeit-Fourier-Transformation des empfangenen GNSS-Signals mittels des Fenstersignals durch eine Fast-Fourier-Transformation durchgeführt wird und vor der Fast-Fourier-Transformation ein Heruntertasten durchgeführt wird.

11. Verfahren nach einem der Ansprüche 1 bis 8, wobei das Berechnen des Interferenzdetektionsspektrogramms die Schritte umfasst:

   Erzeugen von zwei Sinusschwingungen $sin(2\pi F_D n)$ und $cos(2n F_D n)$ mit einer vorbestimmten Frequenz $F_D$ mittels eines Frequenzgenerators; und
   Durchführen einer zirkulären Faltung des GNSS-Signals mittels des Fenstersignals und der Sinusschwingungen $sin(2\pi F_D n)$ und $cos(2n F_D n)$.

12. Verfahren nach einem der vorangegangenen Ansprüche, des Weiteren umfassend den Schritt des Steuerns ob ein Fenstergenerator veranlasst wird, das Fenstersignal zu erzeugen, oder ob das Fenstersignal von einer Speicherbank gelesen werden soll.

13. Computerprogrammprodukt umfassend einen oder mehrere computerlesbare Medien, die computerausführbare Befehle zum Durchführen der Schritte des Verfahrens nach einem der Ansprüche 1 bis 12 umfassen.

14. GNSS-Signal-Erfassungsmittel, wobei GNSS für globales Satelliten-Navigationssystem steht, welches ausgestaltet ist, ein GNSS-Signal von einem Navigationssatelliten zu empfangen, umfassend:

einen Codegenerator, der ausgestaltet ist, eine lokale Kopie des GNSS-Signals zu erzeugen, die in Bezug auf das GNSS-Signal zeitverzögert ist;
eine Speicherbank, die ausgestaltet ist, zumindest ein Fenstersignal zu speichern, und/oder einen Fenstergenerator, der ausgestaltet ist, ein Fenstersignal zu erzeugen;
eine Verarbeitungseinheit, die ausgestaltet ist, ein Suchspektrogramm basierend auf dem empfangenen GNSS-Signal und der lokalen Kopie des GNSS-Signals zu berechnen, oder ein Interferenzdetektionsspektrogramm basierend auf dem empfangenen GNSS-Signal und einem Fenstersignal, das von der Speicherbank gelesen wird oder von dem Fenstergenerator erzeugt wird, zu berechnen;
ein Umschaltmittel, das ausgestaltet ist, der Verarbeitungseinheit entweder die lokale Kopie des GNSS-Signals oder das Fenstersignal zur Verfügung zu stellen; und
ein Detektionsmittel, das ausgestaltet ist, das Interferenzdetektionsspektrogramm von der Verarbeitungseinheit zu empfangen und Interferenz mittels des Interferenzdetektionsspektrogramms zu detektieren.

15. GNSS-Signal-Erfassungsmittel nach Anspruch 14, wobei das von der Verarbeitungseinheit berechnete Interferenzdetektionsspektrogramm gegeben ist durch

$$S(\tau, F_D) = \left| \frac{1}{N} \sum_{n=0}^{N-1} x_R[n] w[n-\tau] \exp(-j2\pi F_D n) \right|^2,$$

wobei $\tau$ eine Zeitverzögerung einer erzeugten lokalen Kopie des GNSS-Signals in Bezug auf das GNSS-Signal $x_R[n]$ ist, $F_D$ eine vorbestimmte Frequenz ist, $n$ ein diskreter Zeitindex ist, und $N$ die Länge des Fenstersignals $w[n]$ ist.

16. GNSS-Signal-Erfassungsmittel nach Anspruch 14 oder 15, wobei die Verarbeitungseinheit ausgestaltet ist, das Interferenzdetektionsspektrogramm basierend auf einem Fenstersignal zu berechnen, das von einem in einem Speicher gespeicherten Fenstersignal abgeleitet wird, indem das gespeicherte Fenstersignal auf einen vorbestimmten Bereich von Abtastzeitpunkten des GNSS-Signals heruntergetastet wird und für Abtastzeitpunkte außerhalb des vorbestimmten Bereichs Nullen hinzugefügt werden.

17. GNSS-Signal-Erfassungsmittel nach einem der Ansprüche 14 bis 16, wobei die lokale Kopie des GNSS-Signals um eine Zeitverzögerung $\tau$ verzögert wird, die Werte $\tau = n\Delta\tau$ mit einem Zeitverzögerungsschritt $\Delta\tau$ größer als ein Signalabtastwert annimmt.

18. GNSS-Signal-Erfassungsmittel nach einem der Ansprüche 14 bis 17, wobei das Erfassungsmittel ausgestaltet ist, Interferenz zu detektieren, indem bestimmt wird, ob eine Zelle des Interferenzdetektionsspektrogramms einen vorbestimmten Interferenzschwellwert überschreitet.

19. GNSS-Signal-Erfassungsmittel nach Anspruch 18, wobei der Interferenzschwellwert $V_t$ gegeben ist durch

$$V_t = -\frac{\sigma_\mu^2 E_w}{N^2} \log(P),$$

wobei $\sigma_\mu^2$, $E_W$, $N$ und $P$ jeweils die Varianz des in dem GNSS-Signal vorhandenen Gaußschen Rauschens, die Energie des Fenstersignals, die Länge des Fenstersignals, und eine vorbestimmte Interferenzfehlalarmwahrscheinlichkeit angeben.

20. GNSS-Signal-Erfassungsmittel nach einem der Ansprüche 13 bis 19, des Weiteren umfassend einen Frequenzgenerator, der ausgestaltet ist, zwei Sinusschwingungen $\sin(2\pi F_D n)$ und $\cos(2\pi F_D n)$ mit einer vorbestimmten Frequenz

$F_D$ zu generieren; und wobei
das Verarbeitungsmittel ausgestaltet ist, aus dem empfangenen GNSS-Signal $x_R[n]$ und aus dem Fenstersignal $w[n]$ ein Signal

$$S_I(\tau, F_D) = \frac{1}{N} \sum_{n=0}^{N-1} x_R[n] w[n-\tau] \cos(2\pi F_D n)$$

und ein Signal

$$S_Q(\tau, F_D) = \frac{1}{N} \sum_{n=0}^{N-1} x_R[n] w[n-\tau] \sin(2\pi F_D n)$$

zu erzeugen, wobei $N$ die Länge des Fenstersignals ist und $\tau$ eine Zeitverzögerung des Fenstersignals in Bezug auf das GNSS-Signal $x_R[n]$ ist, und das Spektrogramm $S(\tau, F_D) = S_I^2(\tau, F_D) + S_Q^2(\tau, F_D)$ zu berechnen.

21. GNSS-Signal-Erfassungsmittel nach einem der Ansprüche 14 bis 19, des Weiteren umfassend ein Fourier-Transformations-Mittel, das ausgestaltet ist, das empfangene GNSS-Signal mittels des Fenstersignal zu Kurzzeit-Fourier-Transformieren, um eine Kurzzeit-Fourier-Transformation zu erhalten, und wobei das Verarbeitungsmittel ausgestaltet ist, das Quadrat des Realteils der Kurzzeit-Fourier-Transformation und das Quadrat des Imaginärteils der Kurzzeit-Fourier-Transformation aufzuaddieren.

22. GNSS-Signal-Erfassungsmittel nach Anspruch 21, des Weiteren umfassend ein Heruntertastmittel, das ausgestaltet ist, ein Signal, das in das Fourier-Transformations-Mittel zur Kurzzeit-Fourier-Transformation eingegeben wird, herunterzutasten.

23. GNSS-Signal-Erfassungsmittel nach einem der Ansprüche 14 bis 19, des Weiteren umfassend einen Frequenzgenerator, der ausgestaltet ist, zwei Sinusschwingungen $\sin(2\pi F_D n)$ und $\cos(2\pi F_D n)$ mit einer vorbestimmten Frequenz $F_D$ zu erzeugen, und wobei die Verarbeitungseinheit ausgestaltet ist, eine zirkuläre Faltung des GNSS-Signals mittels des Fenstersignals und der Sinusschwingung $\sin(2\pi F_D n)$ und $\cos(2\pi F_D n)$ durchzuführen.

24. GNSS-Signal-Erfassungsmittel nach einem der Ansprüche 14 bis 23, wobei das Umschaltmittel steuert, ob der Fenstergenerator veranlasst wird, das Fenstersignal zu erzeugen, oder ob das Fenstersignal von der Speicherbank gelesen werden soll.

25. Empfänger, welcher ausgestaltet ist, ein GNSS-Signal zu empfangen, insbesondere, ein GPS-Empfänger, umfassend ein GNSS-Signal-Erfassungsmittel nach einem der Ansprüche 14 bis 24.

**Revendications**

1. Procédé de détection d'interférence dans un Système Mondial de Navigation par Satellites, GNSS, signal reçu à partir d'un satellite de navigation, comprenant le fait de :

générer une réplique locale du signal GNSS qui est un signal retardé dans le temps par rapport au signal GNSS ;
fournir un signal de fenêtre ;
calculer un spectrogramme de recherche sur la base du signal GNSS reçu et de la réplique locale du signal GNSS ou un spectrogramme de détection d'interférence sur la base du signal GNSS reçu et du signal de fenêtre ;
commuter entre une réplique locale du signal GNSS reçu retardée par un retard temporel prédéterminé $\tau$ par rapport au signal GNSS reçu et au signal de fenêtre afin de commuter entre un processus d'acquisition de signal et un processus de détection d'interférence ;
détecter l'interférence au moyen du spectrogramme de détection d'interférence.

2. Procédé selon la revendication 1, dans lequel le spectrogramme de détection d'interférence est donné par

$$S(\tau, F_D) = \left| \frac{1}{N} \sum_{n=0}^{N-1} x_R[n] w[n-\tau] \exp(-j 2\pi F_D n) \right|^2$$

où $\tau$ est un retard temporel d'une réplique locale générée du signal GNSS par rapport au signal GNSS $x_R[n]$, $F_D$ est une fréquence prédéterminée, n est un indice de temps discret et N est la longueur du signal de fenêtre $w[n]$.

3. Procédé selon la revendication 1 ou 2, dans lequel le signal de fenêtre est lu à partir d'une mémoire stockant au moins un signal de fenêtre, en particulier une fenêtre de Hamming ou une fenêtre de Hanning ou une fenêtre de Blackman, ou bien est généré par un générateur de signal.

4. Procédé selon l'une quelconque des revendications précédentes, dans lequel le signal de fenêtre est déduit d'un signal de fenêtre stocké dans une mémoire en sous-échantillonnant le signal de fenêtre stocké sur une plage prédéterminée d'instants d'échantillonnage du signal GNSS et en ajoutant des zéros correspondant aux instants d'échantillonnage extérieurs à la plage prédéterminée.

5. Procédé selon l'une quelconque des revendications précédentes, dans lequel le retard temporel $\tau$ prend des valeurs $\tau = n \Delta\tau$ avec un pas de retard temporel $\Delta\tau$ plus grand qu'un échantillon du signal.

6. Procédé selon l'une quelconque des revendications précédentes, dans lequel la présence d'une interférence est détectée en déterminant si un élément du spectrogramme de détection d'interférence dépasse un seuil d'interférence prédéterminé.

7. Procédé selon la revendication 6, dans lequel le seuil d'interférence $V_t$ est donné par

$$V_t = -\frac{\sigma^2_\mu E_w}{N^2} \log(P),$$

où $\sigma_\mu^2$, $E_W$, N et P désignent, respectivement, la variance du bruit Gaussien présent dans le signal GNSS, l'énergie du signal de fenêtre, la longueur du signal de fenêtre et une probabilité de fausse alarme d'interférence prédéterminée.

8. Procédé selon l'une quelconque des revendications précédentes, dans lequel le calcul du spectrogramme de détection d'interférence comporte les étapes comprenant de :

générer deux sinusoïdes *sin* $(2\pi F_D n)$ et cos $(2nF_D n)$ avec une fréquence prédéterminée $F_D$ au moyen d'un générateur de fréquences ;
générer à partir du signal GNSS reçu $x_R[n]$ et à partir du signal de fenêtre $w[n]$ un signal

$$S_I(\tau, F_D) = \frac{1}{N} \sum_{n=0}^{N-1} x_R[n] w[n-\tau] \cos(2\pi F_D n) ;$$

$$S_Q(\tau, F_D) = \frac{1}{N} \sum_{n=0}^{N-1} x_R[n] w[n-\tau] \sin(2\pi F_D n).$$

et un signal
où N est la longueur du signal de fenêtre et $\tau$ est un retard temporel du signal de fenêtre par rapport au signal GNSS $x_R[n]$ ; et

calculer $S^2_I(\tau, F_D) + S^2_Q(\tau, F_D)$.

9. Procédé selon l'une quelconque des revendications 1 à 8, dans lequel le calcul du spectrogramme de détection d'interférence comporte les étapes comprenant le fait de réaliser une transformation de Fourier à fenêtre glissante du signal GNSS reçu au moyen du signal de fenêtre pour obtenir une transformée de Fourier à fenêtre glissante ; et ajouter le carré de la partie réelle de la transformée de Fourier à fenêtre glissante et le carré de la partie imaginaire de la transformée de Fourier à fenêtre glissante.

10. Procédé selon la revendication 9, dans lequel la transformation de Fourier à fenêtre glissante du signal GNSS reçu au moyen du signal de fenêtre est exécutée par une transformation de Fourier Rapide et un sous-échantillonnage est exécuté avant la transformation de Fourier Rapide.

11. Procédé selon l'une quelconque des revendications 1 à 8, dans lequel le calcul du spectrogramme de détection d'interférence comporte les étapes comprenant de :

   générer deux sinusoïdes *sin* $(2\pi F_D n)$ et *cos* $(2\pi F_D n)$ avec une fréquence prédéterminée $F_D$ au moyen d'un générateur de fréquences ; et
   exécuter une convolution circulaire du signal GNSS au moyen du signal de fenêtre et des sinusoïdes $sin(2\pi F_D n)$ et *cos* $(2\pi F_D n)$ .

12. Procédé selon l'une quelconque des revendications précédentes comprenant, de plus, l'étape consistant à contrôler si oui ou non un générateur de fenêtre est amené à générer ledit signal de fenêtre ou si ledit signal de fenêtre doit être lu à partir d'un bloc de mémoire.

13. Produit de programme d'ordinateur comprenant un ou plusieurs support(s) exploitable(s) par ordinateur comportant des instructions pouvant être exécutées par ordinateur en vue d'exécuter les étapes du procédé selon l'une quelconque des revendications 1 à 12.

14. Système Mondial de Navigation par Satellites, GNSS, Moyens d'acquisition de signaux configurés pour recevoir un signal GNSS à partir d'un satellite de navigation, comportant :

   un générateur de code configuré pour générer une réplique locale du signal GNSS qui est retardé dans le temps par rapport au signal GNSS ;
   un bloc de mémoire configuré pour stocker au moins un signal de fenêtre et/ou un générateur de fenêtre configuré pour générer un signal de fenêtre ;
   une unité de traitement configurée pour calculer un spectrogramme de recherche sur la base du signal GNSS reçu et de la réplique locale du signal GNSS ou un spectrogramme de détection d'interférence sur la base du signal GNSS reçu et d'un signal de fenêtre lu à partir du bloc de mémoire ou généré par le générateur de fenêtre ;
   des moyens de commutation configurés pour fournir à l'unité de traitement, soit la réplique locale du signal GNSS, soit le signal de fenêtre ; et
   des moyens de détection configurés pour recevoir le spectrogramme de détection d'interférence à partir de l'unité de traitement et pour détecter une interférence au moyen du spectrogramme de détection d'interférence.

15. Moyens d'acquisition d'un signal GNSS selon la revendication 14, dans lesquels le spectrogramme de détection d'interférence calculé par l'unité de traitement est donné par

$$S(\tau, F_D) = \left| \frac{1}{N} \sum_{n=0}^{N-1} x_R[n] w[n-\tau] \exp(-j 2\pi F_D n) \right|^2$$

où $\tau$ est un retard temporel d'une réplique locale générée du signal GNSS par rapport au signal GNSS $x_R[n]$, $F_D$ est une fréquence prédéterminée, n est un indice de temps discret et N est la longueur du signal de fenêtre w[n].

16. Moyens d'acquisition de signal GNSS selon la revendication 14 ou 15, dans lesquels l'unité de traitement est configurée pour calculer le spectrogramme de détection d'interférence sur la base d'un signal de fenêtre déduit d'un signal de fenêtre stocké dans la mémoire en sous-échantillonnant le signal de fenêtre stocké sur une plage prédéterminée d'instants d'échantillonnage du signal GNSS et en ajoutant des zéros correspondant aux instants d'échantillonnage extérieurs à la plage prédéterminée.

**17.** Moyens d'acquisition de signal GNSS selon l'une quelconque des revendications 14 à 16, dans lesquels ladite réplique locale du signal GNSS est retardée d'un retard temporel $\tau$ prenant des valeurs $\tau = n \Delta\tau$ avec un pas de retard temporel $\Delta\tau$ plus grand qu'un échantillon de signal.

**18.** Moyens d'acquisition de signal GNSS selon l'une quelconque des revendications 14 à 17, dans lequel les moyens de détection sont configurés pour détecter une interférence en déterminant si un élément du spectrogramme de détection d'interférence dépasse un seuil d'interférence prédéterminé.

**19.** Moyens d'acquisition de signal GNSS selon la revendication 18, dans lesquels le seuil d'interférence Vt est donné par

$$V_t = -\frac{\sigma^2_{\mu} E_w}{N^2} \log(P),$$

où $\sigma_{\mu}^2$, Ew, N et P désignent, respectivement, la variance d'un bruit Gaussien présent dans le signal GNSS, l'énergie du signal de fenêtre, la longueur du signal de fenêtre et une probabilité de fausse alarme d'interférence prédéterminée.

**20.** Moyens d'acquisition de signal GNSS selon l'une quelconque des revendications 13 à 19 comprenant, de plus, un générateur de fréquence configuré pour générer deux sinusoïdes $sin(2\pi F_D n)$ et $cos(2\pi F_D n)$ avec une fréquence prédéterminée $F_D$ ; et dans lesquels les moyens de traitement sont configurés pour générer à partir du signal GNSS reçu $x_R[n]$ et à partir du signal de fenêtre w[n] un signal

$$S_I(\tau, F_D) = \frac{1}{N} \sum_{n=0}^{N-1} x_R[n] w[n-\tau] \cos(2\pi F_D n) ;$$

$$S_Q(\tau, F_D) = \frac{1}{N} \sum_{n=0}^{N-1} x_R[n] w[n-\tau] \sin(2\pi F_D n),$$

et un signal
où N est la longueur du signal de fenêtre et $\tau$ est un retard temporel du signal de fenêtre par rapport au signal GNSS xR[n] et pour calculer le spectrogramme : $S(\tau, F_D) = S_I^2(\tau, F_D) + S_Q^2(\tau, F_D)$.

**21.** Moyens d'acquisition de signal GNSS selon l'une quelconque des revendications 14 à 19 comprenant, de plus, des moyens de transformation de Fourier configurés pour opérer une transformation de Fourier à fenêtre glissante sur le signal GNSS reçu au moyen du signal de fenêtre afin d'obtenir une transformée de Fourier à fenêtre glissante et dans lesquels les moyens de traitement sont configurés pour additionner le carré de la partie réelle de la transformée de Fourier à fenêtre glissante et le carré de la partie imaginaire de la transformée de Fourier à fenêtre glissante.

**22.** Moyens d'acquisition de signal GNSS selon la revendication 21 comprenant, de plus, des moyens de sous-échantillonnage configurés pour sous-échantillonner un signal qui est introduit dans les moyens de transformation de Fourier en vue d'une transformation de Fourier à fenêtre glissante.

**23.** Moyens d'acquisition de signal GNSS selon l'une quelconque des revendications 14 à 19 comprenant, de plus, un générateur de fréquence configuré pour générer deux sinusoïdes $sin(2\pi F_D n)$ et $cos(2\pi F_D n)$ avec une fréquence prédéterminée $F_D$ et dans lesquels l'unité de traitement est configurée pour exécuter une convolution circulaire du signal GNSS au moyen du signal de fenêtre et des sinusoïdes $sin(2\pi F_D n)$ et $cos(2\pi F_D n)$.

**24.** Moyens d'acquisition de signal GNSS selon l'une quelconque des revendications 14 à 19 dans lesquels lesdits moyens de commutation contrôle si, oui ou non, ledit générateur de fenêtre est entraîné à générer ledit signal de fenêtre ou si ledit signal de fenêtre doit être lu à partir dudit bloc de mémoire.

**25.** Récepteur configuré pour recevoir un signal GNSS, en particulier, récepteur GPS, comportant des moyens d'acquisition de signal GNSS selon l'une quelconque des revendications 14 à 24.

$x_R[n]$

Frequency generator

$F_D$

Alternative frequency generator

$F_D^{'}$

90°

$\frac{1}{N}\sum_{n=0}^{N-1}(\cdot)$

$( \; )^2$

$\tau$

code generator

window generator

$\tau^{'}$

TF-analyzer

$\frac{1}{N}\sum_{n=0}^{N-1}(\cdot)$

$( \; )^2$

Figure 1

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5222843 A

- US 6407699 B

**Non-patent literature cited in the description**

- **L. COHEN.** Time-Frequency Analysis. Prentice Hall, 1994
- Fundamentals of Global Positioning System Receivers: A Software Approach. John Wiley and Sons, 2004

- **JIANG et al.** Mitigation of Narrow-Band Interference on Software Receivers Based on Spectrum Analysis. *ION GNSS 17th Int. Meeting of the Satellite Division,* 21 September 2004, 144-155
- **P. MISRA ; P. ENGE.** Global Positioning System Receivers: Measurement and Performance. Ganga-Jamuna Press, 2001